# EUROPEAN PATENT SPECIFICATION

(11) **EP 2 374 709 B1**
(45) Date of publication and mention of the grant of the patent: **03.07.2013**
(21) Application number: 11075055.1
(22) Date of filing: 25.03.2011
(51) Int. Cl.: B63B 21/08, F16G 11/10, F16G 11/00, F16B 45/00, B63B 21/60, B63B 21/04, F16G 11/04

(54) **Device for fixing a cable, a rope or the like.**
Vorrichtung zur Fixierung eines Kabels, eines Seil oder dergleichen
Dispositif de fixation de câble, corde ou similaire

(30) Priority: 09.04.2010 NL 1037870
(43) Date of publication of application: 12.10.2011
(73) Proprietor: B.V. Machinefabriek M.K.B:, 3045 PD Rotterdam (NL)
(72) Inventor: Klunne, Fred, 3045 PD Rotterdam (NL)
(74) Representative: Lips, Hendrik Jan George

(56) References cited:
- US-A- 5 957 075

## Description

The invention concerns a device for fixing a cable, a rope or the like.

Next, the fixing of a cable will be described in a simple way, without limiting the invention thereof.

So for instance a pusher tug, for linking with another vessel, can be provided with two bollards, spaced at some distance from each other, on which a cable can be put crosswise. The tension load exercised on the cable causes the turns of the cable to be pulled firmly upon each other, so the cable is secured.

An objection to such a device is that the cable cannot be loosened quickly from the bollards, even when this is desirable.

For instance this is the case when a vessel is connected by means of a cable with a tugboat. So by a non-anticipated movement of the vessel, which is always relatively much larger, or through other causes, the connection cable can be orientated transversally on the tugboat, which could cause the boat to capsize. Quickly releasing the cable is than of vital importance, but is very time consuming and labour-intensive with the known device.

The document US 5 954 075 is considered as the closest state of the art and discloses a remotely controlled mooring line quick release apparatus wherein a pin retracts to break free of a loop in the mooring line, the retraction being opposed by the friction between loop and pin.

Now the invention intends to provide a device, where the loosening of the cable can take place in a very short time and under heavy loading conditions.

According to the invention, the device contains a pivotable supporting shaft, in operational mode mainly vertically lined, of which the upper surface is provided with a hook suitable for accommodating a part of the cable, which is provided with means for pivoting and maintaining the shaft in the desired position.

When the cable is under tension and has to execute his normal activity, the hook will be in a certain, neutral position. When, for some reason, the cable must be loosened, the shaft, on which the hook is secured, will be rotated in another position, in such a way that the cable can slide off the hook.

The cable will be free from the hook when the hook, by means of the shaft, is pivoted in a certain angle out of the neutral position. According to the execution, the hook can be rotated in either direction, to the left or to the right.

The means for rotating the shaft and thus the hook will preferably be remotely operated. That is why no operating persons need to be in the proximity of the hook. Therefore, the risk that persons are struck by a discharged cable can be prevented considerably. Rotation of the shaft can possibly take place manually.

When in the neutral position of the hook the cable is not under tension, the cable could slip off the hook. To prevent this, a counter organ could be provided, which is applied in such a stationary way that the open side of the hook, at least for a large part, closes when the hook is situated in the neutral position.

Only when the hook, by means of the shaft, is rotated out of the neutral position over a certain angle in one direction or the other, the cable will become free from the hook.

In particular the counter organ can be executed as a cam, which is pivotally fitted in its plane.

The cam can be pivoted away by putting the cable over the hook, which makes this more easily possible. The cam can also be pivoted away, when the cable has to be discharged from the hook through pivoting of the shaft.

Possibly the cam can lock the hook in its neutral position. Therefore parts of the cam can grab in the shaft or around parts of the shaft or fall over the hook.

For pivoting the cam, remotely operable means can be present.

According to a preferable embodiment of the invention, means for pivoting the shaft, in which the hook is situated, are executed by a chain wheel fixedly applied on the shaft, on which a chain runs, whereby each of both ends of the chain is connected to a hydraulic cylinder.

Because of this, a quick rotating of the shaft can take place. The hydraulic cylinders simultaneously provide that the shaft and thus the hook are held in a neutral position, as long as necessary. Locking of the hook is possible, as has already been described by the cam, but can also be realized in many other ways.

Generally the anchored part of the cable will have the shape of a loop. Also the end of one lifted cable, mentioned in the device, can be connected to another part.

Further, the invention will be explained using an example of an embodiment, shown in the drawing, in which:
Fig. 1 shows a perspective view of a device according to the invention;
Fig. 2 shows a top view of the device of figure 1; and
Fig. 3 shows a side view of the device of figures 1 and 2.

The device shown in the drawing includes a housing, which is closed off at the bottom side by a bottom plate 2, which is fixed by means of bolts 16. At the top side 6 the housing 1 is closed off by part 4, which is fixed by means of bolts 7.

Around housing 1 a flange 3 is extending. By means of bolt holes 5 the flange 3 can be fixed to a part of a vessel, for instance, behind the bitt or at any other suitable place.

In the housing 1 unspecified bearings are located, which support the shaft 8 pivotally. The shaft 8 extends through part 4 of the housing 1. The upper plane 9 of shaft 8 is provided with hook 10.

Within the housing 1 shaft 8 is provided with a chain wheel 11, over which chain 12 extends. Each end 13 of the chain 12 is connected to a hydraulic cylinder 14. The hydraulic cylinders 14 will, in an art not further specified, be provided with connections for the charge and discharge of a hydraulic medium. For controlling the charge and discharge known means can be provided.

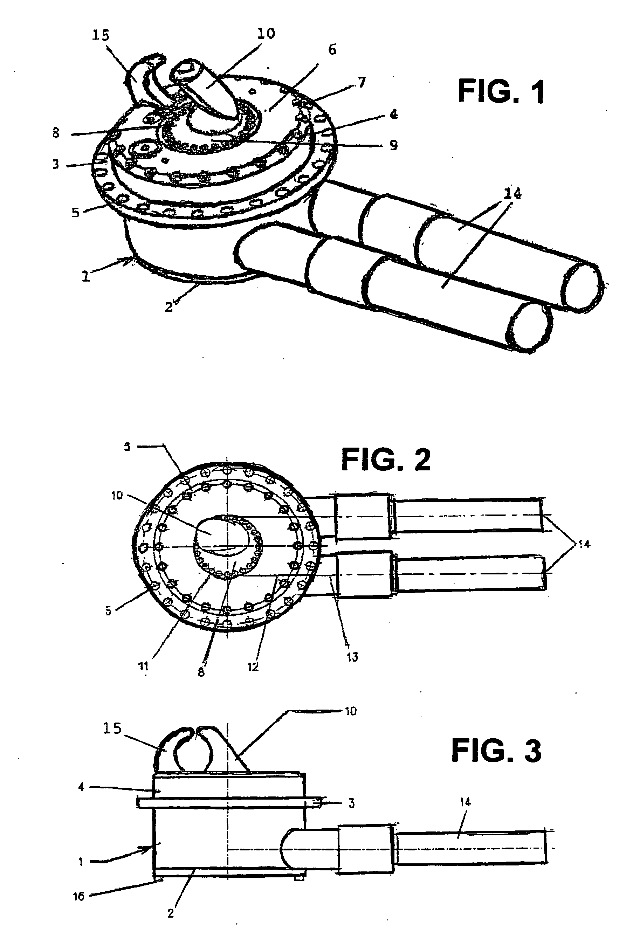

Furthermore a cam 15 is connected to the housing 4, which is situated opposite hook 10, when placed in the neutral position, as shown in figure 1 and 3. In figure 2 cam 15 is omitted.

In an unspecified manner, cam 15 can be pivotal in his surface, so a cable can easily be put on hook 10. For pivoting also a hydraulic cylinder or other means can be used.

By pivoting shaft 8 from one direction to another, hook 10 will come free of cam 15, so the cable could slide off hook 10 at a certain angle of rotation of shaft 8.

Of course for the rotation of shaft 8 also other means can be provided, such as a lever arm system. Such a system will generally occupy more space in order to rotate a shaft 8 at a certain angle.

It is obvious however that only a single possible, simple embodiment of a device according to the invention is shown in the drawing and has been described previously and that many alterations and additions can be provided, but that these shall remain within the field and scope of the invention, as indicated in the claims.

## Claims

1. Device for fixing a cable, a rope or the like, **characterized in that** the device comprises a pivotal supporting shaft (8), in operational use mainly vertically directed, which upper surface (9) is provided with a hook (10) suitable for accomodating a part of a cable, which is provided with means (11-14) for rotating and maintaining the shaft (8) in the desired position.

2. Device as in claim 1, **characterized in that** the means for pivoting the shaft (8) and thus hook (10) are remotely operated.

3. Device as in claim 1 or 2, **characterized in that** the device is provided with a counter organ (15), which is applied in such a stationary way that the open side of the hook (10), at least for a large part, is closed when hook (10) is situated in the neutral position.

4. Device as in claim 3, **characterized in that** the counter organ is executed as a cam (15), which is fitted pivotally in its surface.

5. Device as in claim 4, **characterized in that** the cam (15) locks the hook (10) as well as the shaft (8) in the neutral position of hook (10).

6. Device as in claims 4 or 5, **characterized in that** remotely operable means are available for pivoting the cam (15).

7. Device as in the preceding claims, **characterized in that** means for pivoting the shaft (8), where the hook (10) is situated, are executed by a chain wheel (11) fixedly mounted on shaft (8), on which a chain (12) runs, in which each of both ends (13) of the chain (11) is connected to a hydraulic cylinder (14)

8. Device according to the preceding claims, **characterized in that** the device is provided with means to lock the shaft (8) and thus the hook (10), in the neutral position.

9. Device as in claim 8, **characterized in that** the means to lock shaft (8) into the neutral position are executed by a spring loaded pin, which can drop in a bore in the shaft (8) and can be pulled out of the shaft by remotely operable means.

## Patentansprüche

1. Vorrichtung zur Befestigung eines Kabels, eines Seils oder dergleichen,
**dadurch gekennzeichnet, dass**
die Vorrichtung eine schwenkbare Tragwelle (8) umfasst, die im Betrieb vorwiegend vertikal ausgerichtet ist und deren obere Fläche (9) mit einem Haken (10) versehen ist, der zum Unterbringen eines Teils eines Kabels geeignet ist, und die mit Mitteln (11 - 14) zum Drehen und Halten der Welle (8) in der gewünschten Stellung versehen ist.

2. Vorrichtung nach Anspruch 1, **dadurch gekennzeichnet, dass** die Mittel zum Schwenken der Welle (8) und somit des Hakens (10) ferngesteuert werden.

3. Vorrichtung nach Anspruch 1 oder 2, **dadurch gekennzeichnet, dass** die Vorrichtung mit einem Gegenelement (15) versehen ist, das in einer derart feststehenden Weise angewendet wird, dass die offene Seite des Hakens (10) zumindest zu einem großen Teil geschlossen wird, wenn der Haken (10) sich in der neutralen Stellung befindet.

4. Vorrichtung nach Anspruch 3, **dadurch gekennzeichnet, dass** das Gegenelement als ein Nocken (15) ausgeführt ist, der in seiner Ebene schwenkbar eingebaut ist.

5. Vorrichtung nach Anspruch 4, **dadurch gekennzeichnet, dass** der Nocken (15) den Haken (10) sowie die Welle (8) in der neutralen Stellung des Hakens (10) arretiert.

6. Vorrichtung nach Anspruch 4 oder 5, **dadurch gekennzeichnet, dass** fernsteuerbare Mittel zum Schwenken des Nockens (15) zur Verfügung stehen.

7. Vorrichtung nach den vorhergehenden Ansprüchen, **dadurch gekennzeichnet, dass** Mittel zum Schwenken der Welle (8), an der sich der Haken (10) befindet, von einem Kettenrad (11) ausgeübt werden, das fest an der Welle (8) montiert ist und auf dem eine Kette (12) läuft, wobei jedes der beiden Enden (13) der Kette (11) mit einem Hydraulikzylinder (14) verbunden ist.

8. Vorrichtung nach den vorhergehenden Ansprüchen, **dadurch gekennzeichnet, dass** die Vorrichtung mit Mitteln zum Arretieren der Welle (8) und somit des Hakens (10) in der neutralen Stellung versehen ist.

9. Vorrichtung nach Anspruch 8, **dadurch gekennzeichnet, dass** die Mittel zum Arretieren der Welle (8) in der neutralen Stellung als Federbolzen ausgeführt sind, der in eine Bohrung in der Welle (8) fallen kann und durch fernsteuerbare Mittel aus der Welle herausgezogen werden kann.

## Revendications

1. Dispositif pour fixer un câble, une corde ou analogue, **caractérisé en ce que** le dispositif comprend un arbre support pivotant (8), dirigé principalement verticalement en utilisation opérationnelle, dont une surface supérieure (9) est munie d'un crochet (10) adapté pour recevoir une partie d'un câble, qui est muni de moyens (11-14) pour faire tourner l'arbre et le maintenir (8) dans la position désirée.

2. Dispositif selon la revendication 1, **caractérisé en ce que** les moyens pour faire pivoter l'arbre (8) et ainsi le crochet (10) sont actionnés à distance.

3. Dispositif selon la revendication 1 ou 2, **caractérisé en ce que** le dispositif est muni d'un contre-organe (15) qui est appliqué d'une manière immobile telle que le côté ouvert du crochet (10), pour une grande partie au moins, est fermé lorsque le crochet (10) est situé dans la position neutre.

4. Dispositif selon la revendication 3, **caractérisé en ce que** le contre-organe est réalisé sous la forme d'une came (15) qui est insérée à pivotement dans sa surface.

5. Dispositif selon la revendication 4, **caractérisé en ce que** la came (15) bloque le crochet (10) ainsi que l'arbre (8) dans la position neutre du crochet (10).

6. Dispositif selon les revendications 4 ou 5, **caractérisé en ce que** des moyens actionnables à distance sont disponibles pour faire pivoter la came (15).

7. Dispositif selon les revendications précédentes, **caractérisé en ce que** les moyens pour faire pivoter l'arbre (8) où le crochet (10) est situé sont réalisés par une roue à chaîne (11) montée fixement sur l'arbre (8), sur laquelle une chaîne (12) court, dans laquelle chacune des deux extrémités (13) de la chaîne (11) est reliée à un vérin hydraulique (14).

8. Dispositif selon les revendications précédentes, **caractérisé en ce que** le dispositif est muni de moyens pour bloquer l'arbre (8) et ainsi le crochet (10) dans la position neutre.

9. Dispositif selon la revendication 8, **caractérisé en ce que** les moyens pour bloquer l'arbre (8) dans la position neutre sont réalisés par un ergot chargé par ressort qui peut tomber dans un alésage dans l'arbre (8) et peut être extrait de l'arbre par des moyens actionnables à distance.
